# FASCICULE DE BREVET EUROPEEN

(11) **EP 1 032 225 B1**
(45) Date de publication et mention de la délivrance du brevet: **27.08.2003**
(21) Numéro de dépôt: 00400387.7
(22) Date de dépôt: 10.02.2000
(51) Int. Cl.: H04Q 7/26, H04L 29/06, H04L 12/66

(54) **Serveur pour faire communiquer une paire de machines avec une machine tierce, et réseau de télécommunication privé DECT comportant un tel serveur**
Server zur Kommunikation zwischen einem Paar von Maschinen und einer dritten Maschine und privates DECT Fernsprechsystem mit einem solchen Server
Server for allowing a pair of machinery to communicate with a third machinery and private DECT telecommunications systems comprising such a server

(30) Priorité: 23.02.1999 FR 9902249
(43) Date de publication de la demande: 30.08.2000
(73) Titulaire: ALCATEL, 75008 Paris (FR)
(72) Inventeur: Barbey, Jean-Pierre, 95800 Cergy (FR); Criqui, Jean-François, 92600 Asnières (FR); Rousseau, Jean-René, 95000 Neuville s/Oise (FR)
(74) Mandataire: Sciaux, Edmond

(56) Documents cités:
- EP-A- 0 589 619
- WO-A-93/20642

## Description

L'invention concerne un serveur susceptible d'être mis en coupure entre deux machines, ou n paires de machines, et capable d'analyser et de traiter des informations échangées entre ces machines, afin d'offrir de nouveaux services à ces machines, sans modification de ces machines.

Un premier problème visé par l'invention, est la fourniture de nouveaux services dans un réseau de télécommunication déjà existant, sans modifier la structure de ce réseau.

Un deuxième problème visé par l'invention est l'utilisation de terminaux GSM dans un réseau privé DECT. Un tel réseau comporte un commutateur privé, des terminaux radiotéléphoniques mobiles DECT, et éventuellement des terminaux téléphoniques fixes. Ce réseau comporte des stations de base DECT couplées à ce commutateur privé, au moyen d'une interface spécifique à ces stations de base DECT.

Un tel réseau est utilisé dons une entreprise. Il permet une certaine mobilité des employés à l'intérieur des locaux d'un site de l'entreprise. Cependant une entreprise a souvent plusieurs sites. Certains employés sont donc amenés à se déplacer sur plusieurs sites et à l'extérieur de l'entreprise. Pour pouvoir être joints à peu près partout, ils emportent chacun un terminal radiotéléphonique GSM bénéficiant d'un abonnement pour utiliser un réseau GSM public. Ils sont donc censés utiliser au moins deux types de terminal différent selon qu'ils sont ou non dans un site de l'entreprise.

La multiplication des terminaux pour un même employé n'est pas pratique, notamment à cause de la multiplication des numéros d'appel. En outre, les employés sont tentés d'utiliser uniquement leur terminal GSM bien que le coût des communications soit plus cher que celui des communications via le réseau privé DECT, et bien que le réseau GSM public ne fournisse pas tous les services qu'on peut obtenir du commutateur privé d'une entreprise. D'autre part, les usagers extérieurs à une entreprise sont tentés d'appeler les employés de cette entreprise via leurs terminaux GSM, et non via les terminaux filaires ou DECT, pour maximiser les chances de les joindre. Il est donc souhaitable que les employés d'une entreprise puissent utiliser leurs terminaux GSM via le réseau privé de l'entreprise.

Les procédures d'authentification et de chiffrement d'un appel GSM mettent en oeuvre des algorithmes cryptographiques et des clés secrètes. Ces clés ne peuvent pas être mises à la disposition des réseaux privés sinon la sécurité des communications serait compromise. Il ne serait pas acceptable, non plus, que les communications GSM dans un réseau privé ne bénéficient pas de la sécurité apportée par ces procédures d'authentification et de chiffrement.

Le document Wo 93.20642 A et le document EP 0.589.619 décrivent chacun un système de communication pour interfacer un système radiaotéléphonique privé avec un système téléphonique filaire privé, utilisant respectivement un premier et un second protocole de communication qui sont différents, ces systèmes de communication comprenant des moyens de traduction du premier protocole vers le second, et vice versa.

Le but de l'invention est de permettre aux employés d'une entreprise d'utiliser leurs terminaux GSM dans un site ou dans plusieurs sites de l'entreprise à un coût réduit et avec les mêmes services que s'il s'agissait de terminaux DECT ; de permettre à des visiteurs extérieurs, dûment autorisés, à utiliser leurs terminaux GSM comme des terminaux DECT de l'entreprise, pour accéder au réseau public fixe via le commutateur privé de l'entreprise, ou pour être appelés via le réseau public fixe ; et optionnellement de permettre à des usagers extérieurs, non identifiés, de bénéficier de la même station de base GSM.

Un autre but est de permettre aux employés de bénéficier en outre de-certains services téléphoniques et de mobilité que leur offre leur abonnement GSM, et que ne leur offre pas le réseau privé DECT de l'entreprise.

Un premier objet de l'invention est un serveur pour faire communiquer une paire de machines utilisant un premier protocole de communication, avec une machine tierce, qui utilise un second protocole de communication différent du premier, cette machine tierce pouvant elle-même faire partie d'une autre paire de machines utilisant ce second protocole ; **caractérisé** en ce qu'il comporte une paire de simulateur pour chaque paire de machine, une première machine et une seconde machine d'une paire donnée étant reliées respectivement à deux simulateurs simulant respectivement les comportements de la seconde machine et la première machine ;
en ce que, si la machine tierce ne fait pas partie d'une paire il comporte néanmoins un simulateur relié à cette machine tierce ;
en ce qu'il comporte des moyens pour interconnecter tous les simulateurs, chacun étant capable de communiquer avec chacun des autres simulateurs ;
et en ce que, pour foire communiquer une première et une seconde machine d'une paire de machines donnée avec une machine tierce, le simulateur de la seconde machine comporte des moyens pour faire croire à la première machine que certaines ressources de la machine tierce sont situées dans la seconde machine de la paire considérée.

Le serveur ainsi caractérisé est transparent aux services offerts à la première machine par la deuxième machine de la même paire, mais il permet à la première machine de bénéficier en outre de nouveau services offerts par une machine tierce, avec laquelle elle ne peut pas communiquer habituellement

L'invention sera mieux comprise et d'autres caractéristiques apparaîtront à l'aide de la description ci-dessous et des figures l'accompagnant :
- La figure 1 représente schématiquement un exemple de réalisation du serveur selon l'invention ;
- La figure 2 représente un exemple de réalisation du serveur dans le cas où il est intercalé entre deux noeuds d'un réseau public GSM, pour permettre à des terminaux GSM de bénéficier de bénéficier des services d'un réseau privé DECT ;
- La figure 3 représente le schéma synoptique plus détaillé d'un exemple de réseau privé DECT comportant cet exemple de réalisation du serveur selon l'invention.

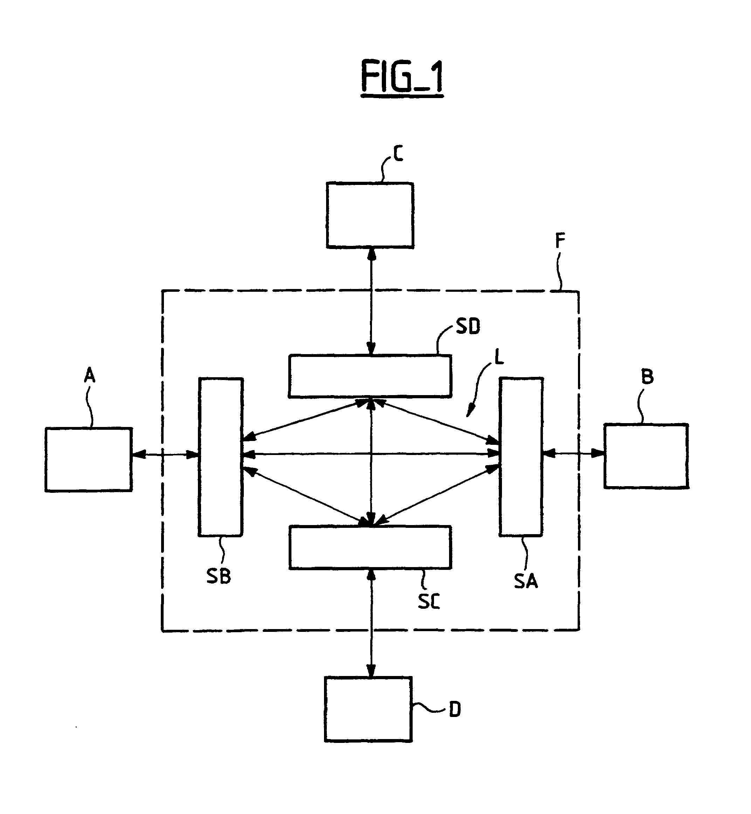

La **figure 1** représente schématiquement un exemple de réalisation F du serveur selon l'invention, dons le cas où il est intercalé entre quatre machines A, B, C, D. Ces machines sont capables de communiquer seulement deux à deux : A et B, C et D. Le serveur F comporte :
- Un simulateur SB, relié à la machine A, pour simuler la machine B, c'est à dire faire croire à la machine A qu'elle est en train de communiquer avec la machine B alors qu'elle est en train de communiquer avec une autre machine, C ou D, avec laquelle est incapable de communiquer directement à cause d'une différence de norme ou de protocole. Ce simulateur SB fait croire à la machine A que certaines ressources d'une machine tierce sont situées dans la machine B. Par conséquent, il lui permet de bénéficier de nouveau services fournis par cette machine tierce.
- Un simulateur SA, relié à la machine B, pour simuler la machine A, c'est à dire faire croire à la machine B qu'elle est en train de communiquer avec la machine A alors qu'elle est en train de communiquer avec une autre machine, C ou D, avec laquelle est incapable de communiquer directement à cause d'une différence de norme ou de protocole. Ce simulateur SA fait croire à la machine B que certaines ressources d'une machine tierce sont situées dans la machine A. Par conséquent, il lui permet de bénéficier de nouveau services fournis par cette machine tierce. Par conséquent, il lui permet de bénéficier de nouveau services fournis par cette machine tierce.
- Un simulateur SD, relié à la machine C, pour simuler la machine D, c'est à dire faire croire à la machine C qu'elle est en train de communiquer avec la machine D alors qu'elle est en train de communiquer avec une autre machine, A ou B, avec laquelle est incapable de communiquer directement à cause d'une différence de norme ou de protocole. Ce simulateur SD fait croire à la machine C que certaines ressources d'une machine tierce sont situées dans la machine D. Par conséquent, il lui permet de bénéficier de nouveau services fournis par cette machine tierce.
- Un simulateur SC, relié à la machine D, pour simuler la machine C, c'est à dire faire croire à la machine D qu'elle est en train de communiquer avec la machine C alors qu'elle est en train de communiquer avec-une autre machine, A ou B, avec laquelle est incapable de communiquer directement à cause d'une différence de norme ou de protocole. Ce simulateur SC fait croire à la machine D que certaines ressources d'une machine tierce sont situées dans la machine C. Par conséquent, il lui permet de bénéficier de nouveau services fournis par cette machine tierce.

Chaque simulateur SA, SB, SC, SD est relié à chacun des autres simulateurs par des liaisons L, et est capable de communiquer avec lui.

Le serveur selon l'invention peut être utilisé pour offrir de nouveaux services dans un réseau de télécommunication, sans nécessiter des modifications sensibles dans les équipements existants. Par exemple, dans un réseau GSM, des messages demandant un service particulier peuvent être déviés d'un premier centre de commutation du service mobile vers un second, si le premier n'offre pas ce service et si le second l'offre.

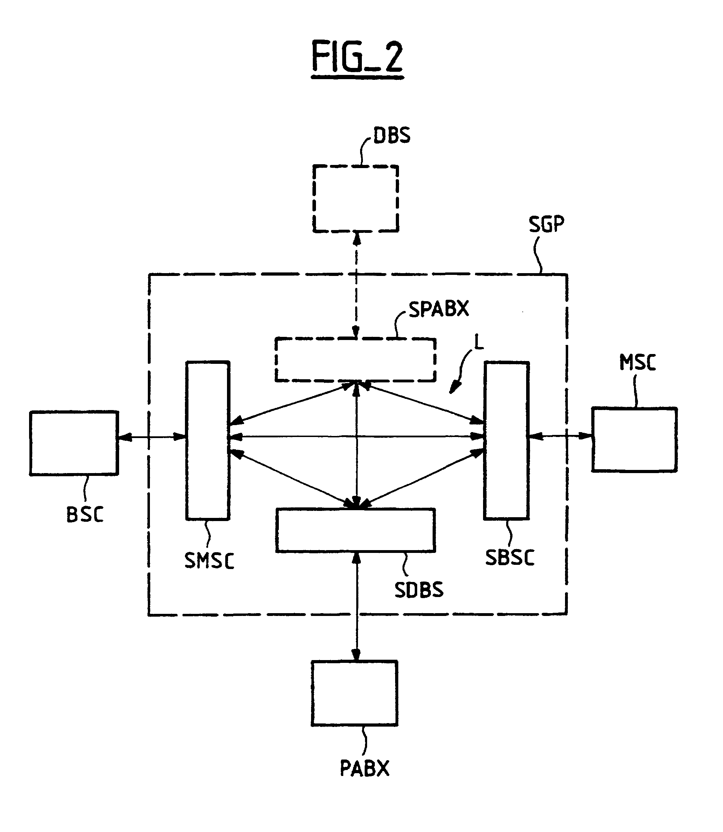

La **figure 2** représente un exemple de réalisation du serveur selon l'invention, dans le cas où il est utilisé pour permettre à des terminaux GSM de bénéficier des services d'un réseau privé DECT. Il est intercalé entre deux noeuds, BSC et MSC, d'un réseau public de radiotéléphonie GSM. Le noeud BSC est un contrôleur de stations de base GSM, et le noeud MSC est un centre de commutation du service radio-mobile GSM. Le serveur SGP est relié d'autre part à un commutateur PABX d'un réseau privé, et optionnellement à une station de base DECT, référencée DBS.

Le contrôleur de stations de base GSM, BSC, et le centre de commutation du service radio-mobile GSM, MSC, sont deux machines qui habituellement communiquent entre elles selon un protocole GSM. Le commutateur privé PABX communique habituellement avec la station de base DECT selon un protocole DECT. Ce sont donc deux paires de machines qui habituellement ne peuvent pas communiquer.

Le serveur SGP comporte
- Un simulateur SDBS, relié au commutateur privé PABX, et simulant une station de base DECT, pour faire croire au commutateur privé PABX qu'il est relié à des terminaux radiotéléphoniques via des stations de base fonctionnant selon la norme DECT, alors que ce simulateur SDBS reçoit des signaux de signalisation et des signaux vocaux provenant de la station de base BSC fonctionnant selon norme GSM ;
- Un simulateur SMSC simulant le commutateur du service radio mobile, MSC, et fonctionnant selon la norme GSM, pour faire croire à la station de base GSM, BSC, qu'elle est reliée au commutateur du service radio-mobile MSC alors que ce simulateur SMSC reçoit des signaux de signalisation et des signaux vocaux provenant du commutateur privé PABX fonctionnant selon la norme DECT, pour certaines communications ; et pour fournir à cette station de base BSC, des signaux de signalisation et des signaux vocaux provenant effectivement du commutateur MSC, pour d'autres communications ;
- un simulateur SBSC simulant la station de base BSC, pour faire croire au commutateur du service radio mobile MSC qu'il est relié à la station de base BSC, alors qu'il est relié au commutateur privé PABX, à certains moments ; et pour le relier effectivement à la station de base BSC, via le simulateur SMSC pendant le reste du temps ;
- optionnellement, un simulateur SPABX simulant le commutateur privé PABX, pour faire croire à la station de base DBS optionnelle qu'elle est reliée au commutateur privé PABX alors qu'elle est reliée au commutateur du service radio-mobile MSC ou bien à la station de base BSC, à certains moments.

Le serveur SGP permet à des terminaux GSM de bénéficier des services d'un réseau privé PN bâti autour du commutateur privé PABX qui habituellement ne communique qu'avec des terminaux DECT. Le serveur SGP analyse tous les messages provenant de la station de base BSC et du commutateur du service radio-mobile MSC, et il dévie vers le commutateur privé PABX tous les messages de signalisation concernant des terminaux GSM appartenant au réseau privé PN, sauf ceux qui concernent l'authentification et le chiffrement des appels GSM. Les terminaux GSM qui communiquent avec la station de base BSC et qui sont déclarés comme appartenant au réseau privé PN peuvent ainsi bénéficier de ces procédures de sécurité propres au réseau GSM, tout en bénéficiant des services propres au réseau privé.

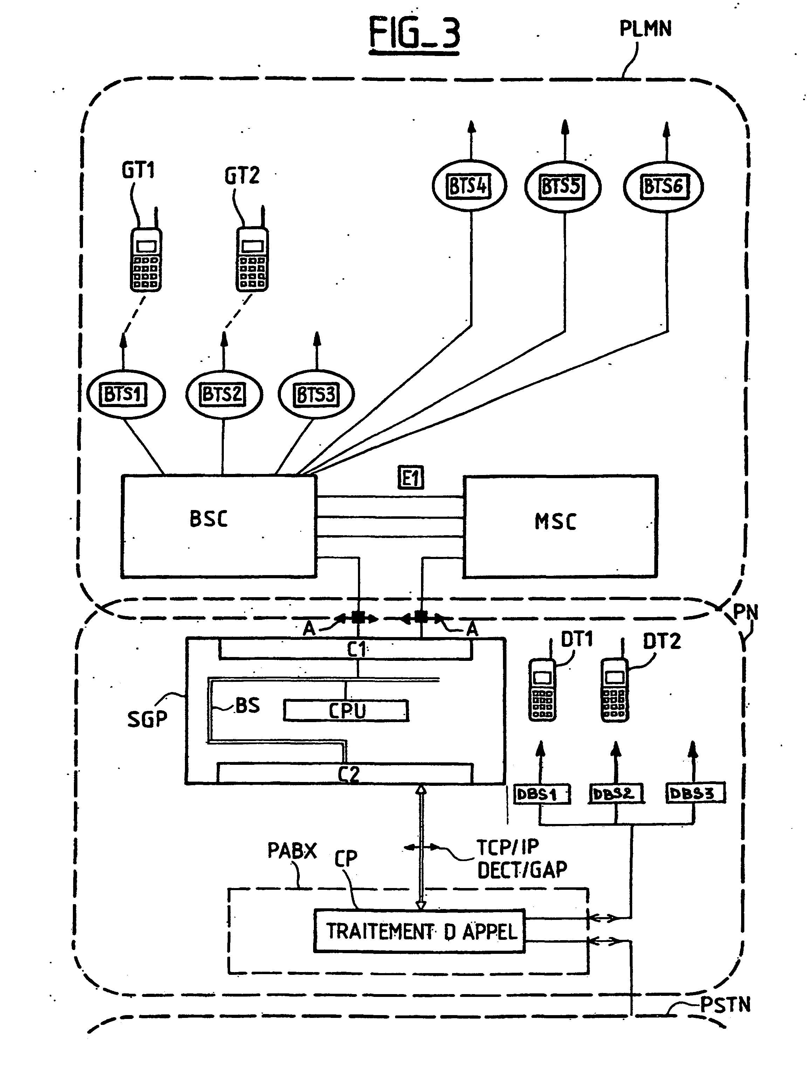

La **figure 3** représente de manière plus détaillée cet exemple de réalisation. Outre le commutateur privé PABX, le réseau privé PN comporte :
- des stations de base de type DECT : DBS1, DBS2, DBS3, reliées au commutateur privé PABX,
- et le serveur GSM privé, SGP.

Le site de l'entreprise considérée est desservi en outre par des stations de base GSM : BTS1, BTS2, BTS3, un contrôleur de stations de base GSM : BSC, et un commutateur du service mobile GSM : MSC, qui appartiennent à un réseau public de radiotéléphonie mobile, PLMN, mais qui ont été installés sur ce site à la demande de l'entreprise. Le contrôleur de stations de base, BSC, peut être relié à d'autres stations de base GSM : BTS4, BTS5, BTS6, extérieures à l'entreprise. Dans le site de l'entreprise, il y a donc simultanément en fonctionnement : des terminaux DECT : DT1, DT2,... et des terminaux GSM : GT1, GT2, ...

Le commutateur privé PABX est relié notamment à un réseau public fixe PSTN. Les terminaux GSM peuvent être utilisés de manière classique, c'est à dire communiquer via le réseau public PLMN, mais ils peuvent aussi communiquer avec le réseau fixe PSTN via le commutateur PABX. Par ailleurs, ceci leur permet de bénéficier de tous les services du réseau privé PN dans lequel est intégré le commutateur PABX, notamment : des communications locales avec les autres terminaux fixes ou mobiles du réseau privé PN, et des communications via le réseau public fixe PSTN ; tout en conservant les services fournis par le réseau GSM.

Optionnellement, une discrimination peut être opérée pour réserver l'accès des stations de base BTS1, BTS2, BTS3, aux employés de l'entreprise, même pour communiquer via le réseau public PLMN. Une procédure de déclaration auprès du serveur SGP permet d'attribuer ce droit d'accès aux employés de l'entreprise et à certains visiteurs.

Le serveur SGP est essentiellement constitué d'un processeur CPU, d'un bus BS, et de cartes coupleurs :
- une carte coupleur C1 le relie au contrôleur de stations de base BSC et au commutateur du service mobile MSC,
- une carte coupleur C2 le relie au dispositif de traitement d'appel CP du commutateur privé PABX, selon le protocole DECT/GAP adapté au commutateur PABX.

L'entrée-sortie du contrôleur de stations de base BSC et l'entrée-sortie du commutateur MSC qui sont reliées à la carte C1 sont habituellement reliées entre elles, dans un réseau GSM classique, par des lignes à 2Mb/s utilisant une interface appelée A normalisée par le GSM, pour échanger des informations de signalisation, et des canaux de parole. La carte C1 du serveur SGP est insérée sur deux de ces lignes, entre le contrôleur de stations de base BSC et le commutateur MSC. La signalisation des canaux de parole GSM est transportée par des canaux sémaphores selon le protocole de signalisation n°7 de l'interface A et sont pris en compte par la carte C1. Cette carte C1 est vue par le réseau de signalisation n°7 comme deux points de signalisation. Les canaux de parole homologues de la carte C1 sont connectés de façon permanente au bus BS.

La signalisation est prise en compte par la carte C2. Lors d'un appel issu d'un terminal GSM appartenant au réseau privé PN, la carte C2 convertit le protocole GSM, en protocole DECT/GAP qui est accepté par le commutateur privé PABX. Lors d'un appel issu d'un terminal GSM, appartenant au réseau privé PN, le processeur CPU convertit le protocole DECT/GAP, en protocole GSM qui est accepté par le contrôleur BSC.

Le serveur SGP mémorise, pour chacun des terminaux GSM qui sont considérés comme appartenant au réseau privé PN, c'est à dire ceux appartenant à l'entreprise et ceux des visiteurs qui ont été dûment déclarés :
- l'identité internationale d'abonné mobile IMSI (International mobile subscriber identity), et l'identité temporaire correspondante TMSI (Temporary mobile subscriber identity),
- l'identité DECT appelée IPUI (International Portable User Identity) utilisée dans le commutateur PABX, et le numéro d'annuaire,
- la relation IMSI/numéro d'annuaire,
- la relation IPUI/numéro d'annuaire,
- et optionnellement l'identité de la société propriétaire du terminal.

Tout se passe, pour le commutateur PABX, comme s'il traitait des terminaux DECT via une station de base de type DECT, telle que DBS1, DBS2, DBS3 ; et tout se passe pour les terminaux GSM : GT1, GT2, GT3, comme s'ils communiquaient avec une station de base GSM d'un réseau public GSM.

Le serveur SGP a pour fonction de détecter et de détourner les messages issus de terminaux GSM, tels que GT1 et GT2, qui appartiennent au réseau PN, à l'exception des messages concernant l'authentification, le chiffrement, et la mobilité dans le réseau GSM. Les terminaux GSM bénéficient des procédures d'authentification et de chiffrement d'un appel GSM, grâce au fait que les messages de signalisation concernant ces procédures sont transmis de façon transparente, et bidirectionnelle, entre le contrôleur de stations de base BSC et le commutateur du service mobile MSC, alors que tous les autres messages sont déviés vers un équipement du réseau privé PN pour bénéficier en outre des services de ce réseau privé.

Les messages concernant les autres terminaux GSM, qui n'appartiennent pas au réseau PN sont transmis de manière transparente entre le contrôleur BSC et le commutateur du service radio mobile MSC.

Les messages concernant des services non connus par le serveur SGP sont transmis de manière transparente entre le contrôleur BSC et le commutateur du service radio-mobile MSC.

## Revendications

1. Serveur (F) pour faire communiquer une paire de machines (A, B) utilisant un premier protocole de communication, avec une machine tierce (C), qui utilise un second protocole de communication différent du premier, cette machine tierce pouvant elle-même faire partie d'une autre paire de machines utilisant ce second protocole ; **caractérisé en ce qu'**il comporte une paire de simulateur (SA, SB) pour chaque paire de machine (A, B), une première machine (A) et une seconde machine (B) d'une paire donnée étant reliées respectivement à deux simulateurs (SB, SA) simulant respectivement les comportements de la seconde machine (B) et la première machine (A) ;
**en ce que**, si la machine tierce (C) ne fait pas partie d'une paire il comporte néanmoins un simulateur relié à cette machine tierce ;
**en ce qu'**il comporte des moyens (L) pour interconnecter tous les simulateurs (SA, SB, SC, SD), chacun étant capable de communiquer avec chacun des autres simulateurs ;
et **en ce que**, pour faire communiquer une première et une seconde machine d'une paire de machines donnée (A-B) avec une machine tierce (C), le simulateur (SB) de la seconde machine (B) comporte des moyens pour foire croire à la première machine (A) que certaines ressources de la machine tierce (C) sont situées dans la seconde machine (B) de la paire considérée.

2. Serveur selon la revendication 1, permettant d'utiliser des terminaux radiotéléphoniques mobiles (GT1, GT2) fonctionnant selon une première norme dans un réseau de télécommunication privé (PN) fonctionnant selon une seconde norme, ce réseau privé comportant :
- un commutateur privé (PABX) fonctionnant selon la seconde norme,
- des terminaux radiotéléphoniques mobiles (DT1, DT2) fonctionnant selon la seconde norme,
- des stations de base (DBS1, DBS2, DBS3) fonctionnant selon la seconde norme, ayant des entrées-sorties couplées à des entrées-sorties de ce commutateur privé (PABX), ces entrées-sorties étant munies d'une interface spécifique à la seconde norme ;
- des stations de base (BTS1, BTS2, BTS3) fonctionnant selon la première norme,
- un contrôleur (BSC) de stations de base, fonctionnant selon la première norme,
- un commutateur du service radio-mobile (MSC) fonctionnant selon la première norme ;
**caractérisé en ce qu'**il comporte
- un premier simulateur (SDBS) simulant une station de base fonctionnant selon la seconde norme,
- un second simulateur (SMSC) simulant un commutateur du service radio mobile, fonctionnant selon la première norme,
- et un troisième simulateur (SBSC) simulant une station de base fonctionnant selon la première norme,
ce premier simulateur (SDBS) simulant une station de base fonctionnant selon la seconde norme, pour faire croire au commutateur privé (PABX) qu'il est relié à des terminaux radiotéléphoniques via des stations de base fonctionnant selon la seconde norme, alors que ce premier simulateur (SDBS) reçoit des signaux de signalisation et des signaux vocaux provenant d'une station de base (BSC) fonctionnant selon la première norme, via le second simulateur (SMSC) simulant un commutateur du service radio mobile ;
ce second simulateur (SMSC) simulant un commutateur du service radio mobile, fonctionnant selon la première norme, pour faire croire à la station de base (BSC) fonctionnant selon la première norme qu'elle est reliée à un commutateur du service radio mobile, fonctionnant selon la première norme, alors que ce second simulateur (SMSC) reçoit des signaux de signalisation et des signaux vocaux provenant du commutateur privé (PABX) fonctionnant selon la seconde norme, via le premier simulateur (SDBS), pour certaines communications ; et pour fournir à cette station de base (BSC), fonctionnant selon la première norme, des signaux de signalisation et des signaux vocaux provenant effectivement du commutateur (MSC) du service radio mobile fonctionnant selon la première norme, via le troisième simulateur (SBSC), pour d'autres communications ;
ce troisième simulateur (SBSC) simulant une station de base fonctionnant selon la première norme, pour faire croire au commutateur du service radio mobile (MSC) fonctionnant selon la première norme, qu'il est relié à une station de base (BSC), fonctionnant selon la première norme, alors qu'il est relié au commutateur privé (PABX) fonctionnant selon la seconde norme, via le premier simulateur (SDBS), à certains moments ; et pour le relier effectivement à la station de base (BSC) fonctionnant selon la première norme, via le deuxième simulateur (SMSC) pendant le reste du temps.

3. Serveur selon la revendication 2, **caractérisé en ce qu'**il est transparent pour les messages concernant les procédure d'authentification et de chiffrement d'un appel selon la première norme.

4. Réseau de télécommunication privé DECT, **caractérisé en ce qu'**il comporte un serveur (SGP) selon l'une des revendications 1 à 3, pour permettre à des terminaux GSM de bénéficier des services de ce réseau privé DECT.

## Patentansprüche

1. Server (F) zur Kommunikation zwischen einem Paar von Maschinen (A, B), die ein erstes Kommunikationsprotokoll verwenden, und einer dritten Maschine (C), die ein von dem ersten verschiedenes zweites Kommunikationsprotokoll verwendet, wobei diese dritte Maschine ihrerseits Teil eines anderen Paars von dieses zweite Protokoll verwendenden Maschinen sein kann, **dadurch gekennzeichnet, dass** er ein Paar von Simulatoren (SA, SB) für jedes Paar von Maschinen (A, B), umfasst, wobei eine erste Maschine (A) und eine zweite Maschine (B) eines gegebenen Paars jeweils mit zwei Simulatoren (SB, SA) verbunden sind, die jeweils das Verhalten der zweiten Maschine (B) und der ersten Maschine (A) simulieren;
dass, wenn die dritte Maschine (C) nicht Teil eines Paars ist, er trotzdem einen mit dieser Maschine verbundenen Simulator umfasst,
dass er Mittel (L) zum Verbinden aller Simulatoren (SA, SB, SC, SD) untereinander aufweist, von denen jeder in der Lage ist, mit jedem der anderen Simulatoren zu kommunizieren;
und dass zur Kommunikation einer ersten und einer zweiten Maschine eines gegebenen Maschinenpaars (A-B) mit einer dritten Maschine (C) der Simulator (SB) der zweiten Maschine (B) Mittel aufweist, um die erste Maschine (A) glauben zu machen, dass bestimmte Ressourcen der dritten Maschine (C) sich in der zweiten Maschine (B) des betrachteten Paars befinden.

2. Server nach Anspruch 1, der es erlaubt, Mobilfunktelefonendgeräte (GT1, GT2), die nach einer ersten Norm arbeiten, in einem privaten Fernmeldenetz (PN) zu benutzen,
das nach einer zweiten Norm arbeitet, wobei dieses private Netz umfasst:
- eine nach der zweiten Norm arbeitende private Vermittlungsanlage (PABX),
- nach der zweiten Norm arbeitende Mobilfunktelefonendgeräte (DT1, DT2),
- nach der zweiten Norm arbeitende Basisstationen (DBS1, DBS2, DBS3) die an Ein/Ausgänge der privaten Vermittlungsanlage (PABX) gekoppelte Ein-/Ausgänge haben,
wobei diese Ein-/Ausgänge mit einer für die zweite Norm spezifischen Schnittstelle versehen sind;
- nach der ersten Norm arbeitende Basisstationen (BTS1, BTS2, BTS3),
- einen nach der ersten Norm arbeitenden Basisstationscontroller (BSC),
- eine nach der ersten Norm arbeitende Vermittlungsanlage des Mobilfunkdienstes (MSC),
**dadurch gekennzeichnet, dass** er umfasst
- einen ersten Simulator (SDBS), der eine nach der zweiten Norm arbeitende Basisstation simuliert,
- einen zweiten Simulator (SMSC), der eine nach der ersten Norm arbeitende Vermittlungsanlage des Mobilfunkdienstes simuliert,
- und einen dritten Simulator (SBSC), der eine nach der ersten Norm arbeitende Basisstation simuliert,
wobei dieser erste Simulator (SDBS) eine nach der zweiten Norm arbeitende Basisstation simuliert, um die private Vermittlungsanlage (PABX) glauben zu machen, dass sie mit Funktelefon-Endgeräten über nach der zweiten Norm arbeitende Basisstationen verbunden ist, während dieser erste Simulator (SDBS) Signalisierungssignale und Sprachsignale, die von einer nach der ersten Norm arbeitenden Basisstation (BSC) kommen, über den zweiten Simulator (SMSC) empfängt, der eine Vermittlungsanlage des Mobilfunkdienstes simuliert;
der zweite Simulator (SMSC) eine nach der ersten Norm arbeitende Vermittlungsanlage des Mobilfunkdienstes simuliert, um die nach der ersten Norm arbeitende Basisstation (BSC) glauben zu lassen, dass sie mit einer nach der ersten Norm arbeitenden Vermittlungsanlage des Mobilfunkdienstes verbunden ist, während dieser zweite Simulator (SMSC) Signalisierungssignale und Sprachsignale von der nach der zweiten Norm arbeitenden privaten Vermittlungsanlage (PABX) über den ersten Simulator (SDBS) für bestimmte Kommunikationen empfängt; und um dieser nach der ersten Norm arbeitenden Basisstation (BSC) Signalisierungssignale und Sprachsignale, die tatsächlich von der nach der ersten Norm arbeitenden Vermittlungsanlage (MSC) des Mobilfunkdienstes kommen, über den dritten Simulator (SBSC) für andere Kommunikation zu liefern;
der dritte Simulator (SBSC) eine nach der ersten Norm arbeitende Basisstation simuliert, um die nach der ersten Norm arbeitende Vermittlungsanlage des Mobilfunkdienstes (MSC) glauben zu machen, dass sie mit einer nach der ersten Norm arbeitenden Basisstation (BSC) verbunden ist, während sie mit der nach der zweiten Norm arbeitenden privaten Vermittlungsanlage (PABX) über den ersten Simulator (SDBS) zu bestimmten Zeitpunkten verbunden ist, und um sie effektiv mit der nach der ersten Norm arbeitenden Basisstation (BSC) über den zweiten Simulator (SMSC) während der restlichen Zeit zu verbinden.

3. Server nach Anspruch 2, **dadurch gekennzeichnet, dass** er transparent ist für die Nachrichten, die die Prozeduren der Authentisierung und Verschlüsselung eines Rufs nach der ersten Norm betreffen.

4. Privates DECT-Fernmeldenetz, **dadurch gekennzeichnet, dass** es einen Server (SGP) nach einem der Ansprüche 1 bis 3 umfasst, um es GSM-Endgeräten zu ermöglichen, die Dienste dieses privaten DECT-Netzes zu nutzen.

## Claims

1. A server (F) for enabling a pair of machines (A, B) using a first communications protocol to communicate with a third machine (C) which uses a second communications protocol that is different from the first, the third machine being able itself to form part of another pair of machines using said second protocol;
said server being **characterized in that**:
it includes one pair of simulators (SA, SB) for each pair of machines (A, B), a first machine (A) and a second machine (B) of any given pair being connected to respective ones of two simulators (SB, SA) respectively simulating the behavior of the second machine (B) and the behavior of the first machine (A);
**in that**, if the third machine (C) does not form part of a pair, it nevertheless includes a simulator connected to said third machine:
**in that** it includes means (L) for interconnecting all of the simulators (SA, SB, SC, SD), each simulator being capable of communicating with each of the other simulators;
and **in that**, in order to enable a first and a second machine of a given pair of machines (A-B) to communicate with a third machine (C), the simulator (SB) of the second machine (B) includes means for making the first machine (A) believe that certain resources of the third machine (C) are situated in the second machine (B) of the pair in question.

2. A server according to claim 1, making it possible to use mobile radiotelephone terminals (GT1, GT2) operating in compliance with a first standard in a private telecommunications network (PN) operating in compliance with a second standard, the private network including:
- a private exchange (PABX) operating in compliance with the second standard;
- mobile radiotelephone terminals (DT1, DT2) operating in compliance with the second standard;
- base stations (DBS1, DBS2, DBS3) operating in compliance with the second standard, and having input-outputs coupled to input-outputs of the private exchange (PABX), each input-output being provided with an interface specific to the second standard;
- base stations (BTS1, BTS2, BTS3) operating in compliance with the first standard;
- a base station controller (BSC) operating in compliance with the first standard; and
- a mobile services switching center (MSC) operating in compliance with the first standard;
said server being **characterized in that** it includes:
- a first simulator (SDBS) simulating a base station operating in compliance with the second standard;
- a second simulator (SMSC) simulating a mobile services switching center operating in compliance with the first standard; and
- a third simulator (SBSC) simulating a base station controller operating in compliance with the first standard;
- the first simulator (SDBS) simulating a base station operating in compliance with the second standard, so as to make the private exchange (PABX) believe that it is connected to radiotelephone terminals via base stations operating in compliance with the second standard, while the first simulator (SDBS) is in fact receiving signalling signals and voice signals coming from a controller (BSC) operating in compliance with the first standard, via the second simulator (SMSC) simulating a mobile services switching center;
- the second simulator (SMSC) simulating a mobile services switching center operating in compliance with the first standard so as to make the GSM controller (BSC) believe that it is connected to the mobile services switching center operating in compliance with the first standard while said second simulator (SMSC) is in fact receiving signalling signals and voice signals coming from the private exchange (PABX) operating in compliance with the second standard, via the first simulator (SDBS), for certain calls; and so as to deliver to said controller (BSC) signalling signals and voice signals that do indeed come from the mobile services switching center (MSC) operating in compliance with the first standard, via the third simulator (SBSC), for other calls; and
- the third simulator (SBSC) simulating a base station controller operating in compliance with the first standard so as to make the mobile services switching center (MSC) operating in compliance with the first standard believe that it is connected to a controller (BSC) operating in compliance with the first standard while it is in fact connected to the private exchange (PABX) operating in compliance with the second standard, via the first simulator (SDBS), at certain times; and so as actually to connect it to the controller (BSC) operating in compliance with the first standard via the second simulator (SMSC) for the rest of the time.

3. A server according to claim 2, **characterized in that** it is transparent for the messages concerning the authentication and enciphering procedure for a call complying with the first standard.

4. A DECT private telecommunications network, **characterized in that** it includes a server (SGP) according to any one of claims 1 to 3, so as to enable GSM terminals to enjoy the services offered by the DECT private network.
